# EUROPÄISCHE PATENTANMELDUNG

(11) **EP 1 344 631 A2**
(43) Veröffentlichungstag der Anmeldung: **17.09.2003**
(21) Anmeldenummer: 03005246.8
(22) Anmeldetag: 10.03.2003
(51) Int. Cl.: B29C 65/08, B65D 33/00

(54) **Verfahren zum Verbinden mehrerer Lagen aus Kunststoffolie**

(30) Priorität: 15.03.2002 DE 10211680
(71) Anmelder: Huhtamaki Forchheim Zweigniederlassung der Huhtamaki Deutschland GmbH & Co. KG, 91301 Forchheim (DE)
(72) Erfinder: Sitzmann, Stefan, 91301 Forchheim (DE)
(74) Vertreter: Hutzelmann, Gerhard

(57) **Zusammenfassung**

Verfahren zum Verbinden mehrerer Lagen aus Kunststoffolie, insbesondere zum Verbinden von Kunststoffbeuteln (2), zu einem Block (1), wobei die Kunststoffolien bzw. die Kunststoffbeutel (2) einzeln vom Block (1) abnehmbar sein sollen; Die Kunststoffolien bzw. Kunststoffbeutel (2) werden an einem Randstreifen mittels Ultraschall-Schweißung miteinander verbunden.

## Beschreibung

Die Erfindung bezieht sich auf ein Verfahren zum Verbinden mehrerer Lagen aus Kunststoffolie, insbesondere zum Verbinden von Kunststoffbeuteln, zu einem Block, wobei die Kunststoffolien bzw. die Kunststoffbeutel einzeln vom Block abnehmbar sein sollen.

Aus DE-A-199 35 065 ist es bekannt, einen Packen Kunststoffbeutel durch beheizte Nadeln zu verschweißen.

Ein derartiges Verfahren führt jedoch nicht zu einer gleichmäßigen Verbindung aller zueinander benachbarten Beutel.

Der Erfindung liegt die Aufgabe zugrunde, ein Verfahren aufzuzeigen, mit dem alle Kunststoffolien bzw. Beutel wenigstens annähernd gleichmäßig verbunden werden, so daß beim Ablösen einzelner Folien bzw. Beutel immer in etwa gleiche Ablöskräfte aufzubringen sind.

Diese Aufgabe wird erfindungsgemäß dadurch gelöst, daß die Kunststoffolien bzw. Kunststoffbeutel an einem Randstreifen mittels Ultraschall-Schweißung miteinander verbunden werden.

Durch die Ultraschall-Schweißung kann ein sehr gut steuerbares Schweißen erfolgen, so daß auch die Verbindungen zwischen den einzelnen Lagen sehr gleichmäßig ausgebildet werden können.

Eine weitere vorteilhafte Ausgestaltung der Erfindung liegt darin, daß wenigstens zwei Schweißstellen vorgesehen werden.

Damit ist einerseits die notwendige Haltekraft der einzelnen Schweißstelle geringer und andererseits werden die verbundenen Folien bzw. Beutel sehr gut zusammengehalten.

Erfindungsgemäß kann jedoch auch vorgesehen sein, daß wenistens eine Schweißstelle mit einer Längserstreckung vorgesehen wird.

Auch hierdurch wird ein sehr guter Zusammenhalt der einzelnen Lagen untereinander erzielt.

Eine vorteilhafte Ausgestaltung der Erfindung ist auch dadurch gekennzeichnet, daß die Schweißstellen so ausgebildet sind, daß sie verhältnismäßig leicht auftrennbar sind.

Damit ist gewährleistet, daß insbesondere bei maschineller Verarbeitung der Folien bzw. Beutel keine Störungen auftreten.

Eine leichte Ablösbarkeit der einzelnen Lagen ist erfindungsgemäß auch dadurch gewähleistet, daß die Schweißstellen mit einer Perforationslinie gegen den abzulösenden Teil der Kunststoffolie bzw. des Kunststoffbeutels abgetrennt werden.

Dabei hat es sich als besonders vorteilhaft erwiesen, wenn gemäß einer weiteren Ausgestaltung der Erfindung die Perforationslinie parallel zu einem Außenrand der Kunststoffolie bzw. des Kunststoffbeutels angeordnet wird.

Damit lassen sich die Kunststoffolien bzw. Kunststoffbeutel besonders einfach von dem die Schweißstellen aufweisenden Randstreifen ablösen.

Erfindungsgemäß ist es jedoch auch möglich, daß jede Schweißstelle von einer Perforationslinie umgeben wird, die an einer Außenkante der Kunststoffolie bzw. des Kunststoffbeutels beginnt und an der gleichen Außenkante endet.

Dabei kann die erfindungsgemäß die Perforationslinie halbkreisförmig um die Schweißstelle herumlaufen.

Es ist aber auch möglich, daß die Perforationslinie in einem rechteckigen Verlauf ausgebildet wird.

Eine weitere vorteilhafte Ausgestaltung der Erfindung ist dadurch gekennzeichnet, daß die Ultraschall-Schweißung mit einer stiftförmigen Sonotrode durchgeführt wird, welche die zu verschweißenden Lagen der Kunststoffolien bzw. Kunststoffbeutel beim Schweißen durchdringt und dabei einen Schweißring bildet.

Die Sonotrode wird dabei innerhalb des zu verschweißenden Blocks während des Schweißvorganges abgesenkt und erfasst dabei alle einzelnen Lagen des Blocks.

Als sehr vorteilhaft hat sich dabei ergeben, wenn gemäß einer weiteren Ausgestaltung der Erfindung zum Ultraschall-Schweißen eine Sonotrode verwendet wird, welche durch eine Öffnung eines Niederhalters gegen die zu verschweißenden Kunststofflagen pressbar ist.

Sehr günstig ist es dabei, wenn erfindungsgemäß die stiftförmige Sonotrode einen im Durchmesser größeren Ansatz aufweist, der sich am Ende des Schweißvorganges an die oberste Lage der zu verschweißenden Kunststofflagen anlegt.

Dadurch werden auch die obersten Lagen des Blocks zuverlässig zusammengepresst.

Eine weitere vorteilhafte Ausgestaltung der Erfindung liegt darin, daß der Ansatz wenigsten zwei einander gegenüberliegende Spitzen aufweist, welche gegen den Kunstoffolien- bzw. Kunststoffbeutel-Stapel gerichtet werden um die obersten Lagen miteinander zu verschweißen.

In der Zeichnung ist die Erfindung anhand von Ausführungsbeispielen veranschaulicht. Dabei zeigen:
- Fig. 1: eine Draufsicht auf einen Block aus Kunststoffbeuteln die an ihrem unteren Ende durch Schweißstellen miteinander verbunden sind, die durch eine durchlaufende Perforationslinie vom eigentlichen Beutel abgetrennt sind,
- Fig.2: eine Draufsicht eines weiteren Blocks aus Kunststoffbeuteln, wobei die Schweißstellen durch einzelne Perforationslinien abgegrenzt sind und
- Fig.3: eine Sonotrode zum Verschweißen von Kunststoffbeuteln.

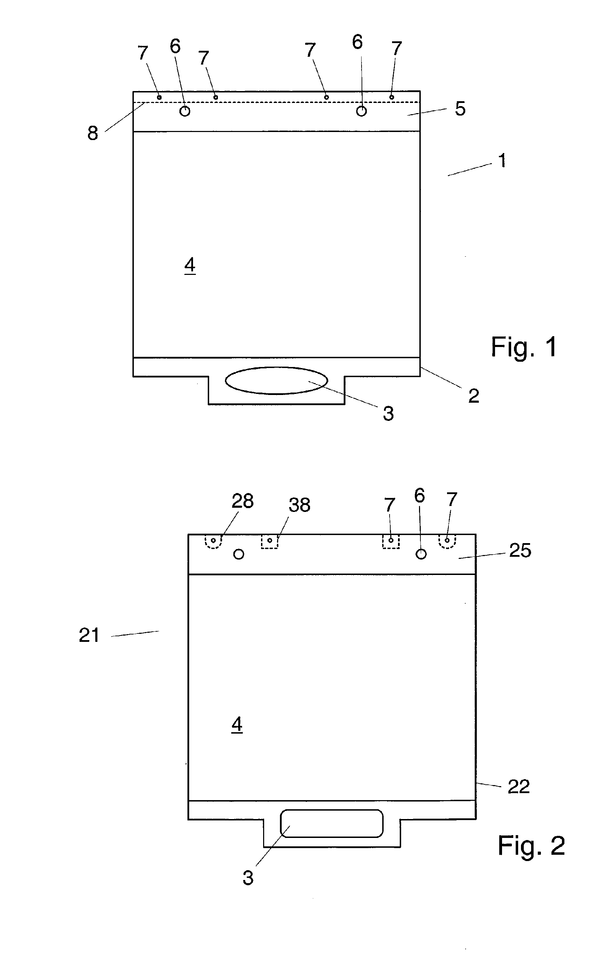

Mit 1 ist in Fig. 1 ein Block von Kunststoffbeuteln 2 bezeichnet, von denen nur der oberste Kunststoffbeutel 2 dargestellt ist. Die Beutel 2 sind mit einem Tragegriff 3 versehen und die eine Seitenwand 4 ist kürzer ausgebildet als die andere Seitenwand 5. In dieser längeren Seitenwand 5 sind zwei Löcher 6 zum Festlegen des Beutels 2 während des Befüllens vorgesehen. Mit Hilfe von vier Schweißstellen 7 sind die einzelnen Beutel untereinander verbunden. Diese vier Schweißstellen 7 sind mittels einer quer über die Seitenwand 5 verlaufenden Perforationslinie 8 von der restlichen Seitenwand 5 abgeteilt. Entlang dieser Perforationslinie 8 wird dann jeweils ein Beutel 2 vom Beutel-Block 1 abgetrennt.

In Fig.2 ist ein Block 21 nahezu identischer Kunststoffbeutel 22 dargestellt. Lediglich an der zweiten Seitenwand 25 sind die Schweißstellen 7 einzeln durch Perforationslinien 28 bzw. 38 abgegrenzt.

Die Perforationslinien 28 sind halbkreisförmig um die Schweißstellen 7 herumgelegt, wobei die beiden Enden der Perforationslinie an einer gemeinsamen Kante der Seitenwand 25 münden.

Die Perforationslinien 38 haben dagegen einen rechtwinkligen Verlauf um die Schweißstellen 7.

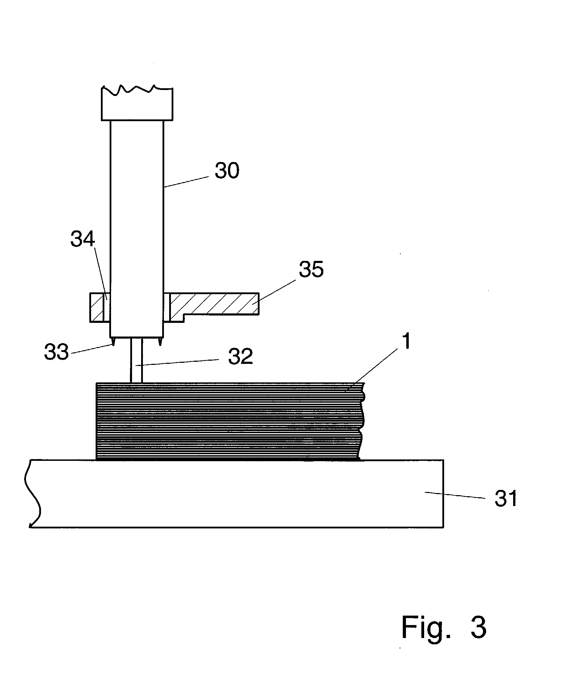

In Fig.3 ist eine Sonotrde 30 dargestellt, die mit einem Amboß 31 zusammenwirkt. Die Sonotrode 30 ist an ihrem unteren, dem Amboß 31 zugekehrten Ende mit einem stiftförmigen Sonotroden-Ansatz 32 versehen, der etwa 2,5 mm Durchmesser aufweist. Am unteren Ende der Sonotrode sind 2 einander diametral gegenüberliegende Spitzen 33 vorgesehen. Die Sonotrode 30 greift durch die Öffnung 34 eines Niederhalters 34 hindurch und ist höhenverstellbar gelagert.

Auf den Amboß 31 wird der zu verschweißende Block 1 von Kunststoffbeuteln 2 gelegt und mittels des Niederhalters 35 festgehalten.

Der stiftförmige Ansatz 32 wird auf den Block 1 aufgelegt und der Ultraschall eingeschaltet und gleichzeitig die Sonotrode 30 nach unten gedrückt. Der stiftförmige Ansatz der Sonotrode schweißt sich dabei in den Block 1 ein. Zum Schweißende setzen sich noch die beiden Spitzen 33 auf den obersten Beutel des Blocks 1 auf und verschweißt die obersten Lagen zusätzlich.

Beim Herausziehen der Sonotrode 30 bzw. des stiftförmigen Ansatzes 32 aus dem Block 1 hinterlässt dieser einen zylindrischen Schweißkanal, wobei die Verschweißung die einzelnen Lagen zusammenhält.

## Patentansprüche

1. Verfahren zum Verbinden mehrerer Lagen aus Kunststoffolie, insbesondere zum Verbinden von Kunststoffbeuteln, zu einem Block, wobei die Kunststoffolien bzw. die Kunststoffbeutel einzeln vom Block abnehmbar sein sollen, **dadurch gekennzeichnet, daß** die Kunststoffolien bzw. Kunststoffbeutel an einem Randstreifen mittels Ultraschall-Schweißung miteinander verbunden werden.

2. Verfahren nach Anspruch 1, **dadurch gekennzeichnet, daß** wenigstens zwei Schweißstellen vorgesehen werden.

3. Verfahren nach Anspruch 1, **dadurch gekennzeichnet, daß** wenistens eine Schweißstelle mit einer Längserstreckung vorgesehen wird.

4. Verfahren nach einem der Ansprüche 1 bis 3, **dadurch gekennzeichnet, daß** die Schweißstellen so ausgebildet sind, daß sie bei verhältnismäßig leicht auftrennbar sind.

5. Verfahren nach einem der Ansprüche 1 bis 3, **dadurch gekennzeichnet, daß** die Schweißstellen mit einer Perforationslinie gegen den abzulösenden Teil der Kunststoffolie bzw. des Kunststoffbeutel abgetrennt werden.

6. Verfahren nach Anspruch 5, **dadurch gekennzeichnet, daß** die Perforationslinie parallel zu einem Außenrand der Kunststoffolie bzw. des Kunststoffbeutels angeordnet wird.

7. Verfahren nach Anspruch 5, **dadurch gekennzeichnet, daß** jede Schweißstelle von einer Perforationslinie umgeben wird, die an einer Außenkante der Kunststoffolie bzw. des Kunststoffbeutels beginnt und an der gleichen Außenkante endet.

8. Verfahren nach Anspruch 7, **dadurch gekennzeichnet, daß** die Perforationslinie halbkreisförmig um die Schweißstelle herumläuft.

9. Verfahren nach Anspruch 7, **dadurch gekennzeichnet, daß** die Perforationslinie in einem rechteckigen Verlauf ausgebildet wird.

10. Verfahren nach einem der vorghergehenden Ansprüche, **dadurch gekennzeichnet, daß** die Ultraschall-Schweißung mit einer stiftförmigen Sonotrode durchgeführt wird, welche die zu verschweißenden Lagen der Kunststoffolien bzw. Kunststoffbeutel durchdringt und dabei einen Schweißring bildet.

11. Verfahren nach einem der vorhergenden Ansprüche, **dadurch gekennzeichnet, daß** zum Ultraschall-Schweißen eine Sonotrode verwendet wird, welche durch eine Öffnung eines Niederhalters gegen die zu verschweißenden Kunststofflagen pressbar ist.

12. Verfahren nach Anspruch 10 oder 11, **dadurch gekennzeichnet, daß** die stiftförmige Sonotrode einen im Durchmesser größeren Ansatz aufweist, der sich am Ende des Schweißvorganges an die oberste Lage der zu verschweißenden Kunststofflagen anlegt.

13. Verfahren nach Anspruch 12, **dadurch gekennzeichnet, daß** der Ansatz wenigsten zwei einander gegenüberliegende Spitzen aufweist, welche gegen den Kunstoffolien- bzw. Kunststoffbeutel-Stapel gerichtet werden um die obersten Lagen miteinander zu verschweißen.
